# EUROPEAN PATENT APPLICATION

(11) **EP 4 844 629 A2**
(43) Date of publication of application: **25.11.2026**
(21) Application number: 26171631.0
(22) Date of filing: 10.04.2026
(51) Int. Cl.: G06K 7/10

(54) **METHODS AND SYSTEMS OF OPTIMAL FREQUENCY CONFIGURATION AT READER DEVICES FOR READER DEVICE COORDINATION**

(30) Priority: 14.04.2025 US 202519178537
(71) Applicant: T MOBILE INNOVATIONS LLC, Overland Park KS 66251-2100 (US)
(72) Inventor: SATAPATHY, Durga, Ashburn, 20148 (US)
(74) Representative: Suddaby, Mark Edward

(57) **Abstract**

A method comprises receiving data from a reader device (112), wherein the data includes baseline data (156) and inventory data (138) received by the reader device over each frequency supported by the reader device, generating key performance indicator data (175) for each frequency over supported by the reader device based on the data, wherein the key performance indicator data comprises metrics evaluating a performance of the reader device at each frequency supported by the reader device, instructing the reader device to set an antenna setting (126) to an optimal frequency (140), wherein the optimal frequency is based on the key performance indicator data at each frequency supported by the reader device.

## Description

### CROSS-REFERENCE TO RELATED APPLICATIONS

### STATEMENT REGARDING FEDERALLY SPONSORED RESEARCH OR DEVELOPMENT

### REFERENCE TO A MICROFICHE APPENDIX

### BACKGROUND

Modern inventory environments (e.g., warehouses and retail stores) may store items on behalf of various customers/business enterprises. Each item may be coupled to one or more tags, such as a Radio Frequency Identification (RFID) tag. Antenna systems and/or reader devices may be positioned throughout the inventory environment. RFID tags may include various components, such as, for example, an integrated circuit for storing and processing information, an antenna for communicating signals, etc. For example, the integrated circuit may include memory for storing tag data (e.g., a unique identifier), a modulator for modulating signals, and circuitry for power management. The RFID tag may receive signals from antenna systems/reader devices, obtain power from the received signals, and transmit responses back to the reader devices.

### SUMMARY

In an embodiment, a method of optimal frequency configuration at reader devices for reader device coordination is disclosed. The method comprises receiving, by a controller application executing at a controller system, baseline data describing a plurality of tags detected in an area of an inventory environment from a reader device, in which the baseline data comprises a quantity of the tags detected in the area and an identifier associated with each of the tags detected in the area, and receiving, by the controller application, aggregate inventory data from the reader device, in which the aggregate inventory data comprises tag data from one or more of the tags in the area and collected by the reader device at each frequency supported by the reader device. The method further comprises generating, by the controller application, key performance indicator data for each frequency supported by the reader device based on the baseline data and the aggregate inventory data. The key performance indicator data comprises an inventory parameter describing an accuracy of the tag data received at each frequency supported by the reader device, a positioning parameter describing an accuracy of a calculated location of each of the tags based on a signal carrying the tag data of each of the tags received at each frequency supported by the reader device, an interference parameter describing a level of interference detected in the signal received from each of the tags at each frequency supported by the reader device, and a movement parameter indicating whether movement of a moving tag is detected in the area and at least one of a direction of the movement or a speed of the movement. The method further comprises determining, by the controller application, an optimal frequency for the reader device based on a rule associated with the reader device and at least one of the inventory parameter, the positioning parameter, the interference parameter, or the movement parameter, and instructing, by the controller application, the reader device to set an antenna setting of the reader device to the optimal frequency.

In another embodiment, an inventory system is disclosed. The inventory system comprises a reader device and a controller system. The reader device comprises a first application stored in a memory of the reader device, which when executed by a processor of the reader device, causes the first application to be configured to receive baseline data from a plurality of tags detected in an area of an inventory environment, the baseline data comprising a quantity of the tags detected in the area and an identifier associated with each of the tags detected in the area, receive tag data from a plurality of tags in an area covered by the reader device at a plurality of different frequencies supported by the reader device to obtain aggregate inventory data, and transmit the baseline data and the aggregate inventory data to the controller system. The controller system comprises a controller application stored in a memory of the controller system, which when executed by a processor of the controller system, causes the controller application to be configured to generate key performance indicator data for each of the different frequencies supported by the reader device based on the baseline data and the aggregate inventory data. The key performance indicator data comprises an inventory parameter describing an accuracy of the tag data received at each frequency supported by the reader device, a positioning parameter describing an accuracy of a calculated location of each of the tags based on a signal carrying the tag data of each of the tags received at each frequency supported by the reader device, and an interference parameter describing a level of interference detected in the signal received from each of the tags at each frequency supported by the reader device. The controller application is further configured to instruct the reader device to set an antenna setting of the reader device to an optimal frequency, wherein the optimal frequency is based on at least one of the inventory parameter, the positioning parameter, or the interference parameter.

In yet another embodiment, a method is disclosed. The method comprises receiving, by a controller application executed at a controller system, data from a reader device, in which the data includes baseline data and inventory data received by the reader device over each frequency supported by the reader device. The method further comprises generating, by the controller application, key performance indicator data for each frequency over supported by the reader device based on the data, in which the key performance indicator data comprises metrics evaluating a performance of the reader device at each frequency supported by the reader device. The method further comprises instructing, by the controller application, the reader device to set an antenna setting to an optimal frequency, in which the optimal frequency is based on the key performance indicator data at each frequency supported by the reader device.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a communication network including an inventory system for optimal frequency configuration at reader devices for reader device coordination according to various embodiments of the disclosure.
FIG. 2A is a diagram illustrating a reader device receiving data based on tags in the inventory system of FIG. 1 according to various embodiments of the disclosure.
FIG. 2B is a message sequence diagram illustrating the reader device of FIG. 2A communicating with a controller system to determine an optimal frequency configuration for the reader device according to various embodiments of the disclosure.
FIG. 3 is a diagram illustrating an optimal frequency configuration for multiple reader devices based on moving tags in inventory system of FIG. 1 according to various embodiments of the disclosure.
FIG. 4 is a flowchart illustrating a first method for optimal frequency configuration at reader devices using the inventory system of FIG. 1 according to various embodiments of the disclosure.
FIG. 5 is a flowchart illustrating a second method for optimal frequency configuration at reader devices using the inventory system of FIG. 1 according to various embodiments of the disclosure.
FIG. 6 is a block diagram of a computer system implemented within the communication system of FIG. 1 according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

RFID reader devices (also referred to herein as "reader devices") operate by emitting radio frequency signals to communicate with RFID tags (also referred to herein as "tags") attached to items in an inventory environment, such as a warehouse or retail store. The antennas may be included as part of the reader device or may be separate from the reader device (but proximate enough to communicate with tags in the read zone of the reader device).

These tags may be low-cost, ultra-high frequency (UHF) tags that may operate in the frequency range of 600 megahertz (MHz) to 2 (or 3) gigahertz (GHz), with some reader devices operating in frequencies between 860 MHz and 960 MHz, for example. These UHF tags may be used for applications in inventory management and control. The tags may also be millimeter wave ("mmWave") tags that may operate on mmWave frequency bands (e.g., between 24 GHz to 300 GHz). The mmWave tags may offer higher data transfer rates and enhanced spatial resolution, making them particularly advantageous for applications requiring precise item tracking. There may be other types of tags positioned on the items that may be advantageous for various reasons. For example, the tags may be low frequency tags (e.g., operating over 30-300 kHz, which may have good performance in environments with metal/water), high frequency tags (e.g., operating over 3-30 MHz, which are tags that may operate well in environments with limited interference), infrared tags (e.g., low cost, energy efficient tags that are resistant to radio frequency interference), optical tags (e.g., scannable with common devices with cameras), etc. In some cases, multiple different types of tags may be attached to the same item, presumably because the tags may be used for different purposes (e.g., inventory management versus location tracking).

Therefore, in an inventory environment, reader devices and tags may be capable of communicating over different supported frequency bands, sub-bands, and channels, although only one frequency may be configured for communication at one time. Each frequency band, sub-band, and channel may have a respective communication range, application, and/or advantage. Meanwhile, most reader devices and antennas may be set to communicate over a single frequency band or channel, even though most reader devices may be configured to operate over several different frequency bands or channels. For example, antennas/reader devices (hereinafter referred to as "reader devices," which may be assumed to include or communicate with an antenna) may be preset by operators at the inventory environment to operate at a fixed frequency band/channel. The operator may not subsequently modify the fixed frequency band/channel of the reader device (i.e., the reader device may operate at the fixed frequency band/channel indefinitely until the fixed frequency band/channel is manually modified).

However, the fixed frequency band/channel is sometimes inept or inefficient in terms of communicating with tags in the area covered by the reader device. For example, the fixed frequency band/channel of the reader device may not be operating at a frequency that effectively communicates with all of the tags in the area; the fixed frequency band/channel of the reader device may not consider other environmental factors (e.g., metals/liquids) in the area; the fixed frequency band/channel of the reader device may be the same as the fixed frequency band/channel of another proximate reader device, causing interference; etc. Therefore, the current configurations of reader devices (i.e., the fixed frequency over which reader devices communicate) do not effectively or efficiently use the capabilities of the reader devices (e.g., the multiple frequencies over which the reader devices are capable of communicating) to communicate with different tags in the area of the inventory environment.

The present disclosure addresses the foregoing technical problems by providing a technical solution in the technical field of inventory management and precision tracking of tags, by dynamically configuring reader devices to operate over an optimal frequency (e.g., frequency band/sub-band/channel) based on various key performance indicators (KPIs) as further described herein. By optimizing the reader devices to perform at specific frequencies (that may be dynamically modified), the inventory system operates more efficiently and effectively because tag data may be received by reader devices from tags with minimal interference, the inventory data collected by reader devices may be more likely to be accurately reflecting the tags in the environment, the signals received from the tags may be optimally received for tag positioning, etc. Therefore, the embodiments disclosed herein improve the functioning of the reader devices and controller system of the inventory system in performing various inventory management and positioning tasks.

The inventory system disclosed herein includes the tags (e.g., RFID tags) positioned on items in an inventory environment (e.g., a retail store and warehouse), reader devices positioned within the inventory environment, and a controller system positioned within or external to the inventory environment. In some cases, more than one tag may be positioned on a single item (e.g., certain items of a predefined type - high value items, high security items, protected items, historical items, etc. - may include both UHF tags and a mmWave tag). One or more of the reader devices may support (be capable of communicating over) multiple different frequencies (e.g., low frequency, high frequency, mmWave, etc.), although each reader device may only operate in one frequency at a time to communicate with the tags and forward the data to the controller system. The controller system may include a controller application that receives the data from the reader devices, determines an optimal frequency for the reader devices, and transmits an instruction to the reader devices to modify or set the communicating frequency of the reader device to the determined optimal frequency.

For illustrative purposes, suppose a reader device is capable of supporting a low frequency band (e.g., 30 kHz to 300 kHz), mid-frequency band (3 MHz to 300 MHz), high frequency band (300 MHz to 3 GHz), and a mmWave frequency band 24 GHz to 300 GHz (although it should be appreciated that reader devices may support any number of frequencies). The controller application may maintain data regarding the supported frequencies of each of the reader devices in an inventory environment.

In an embodiment, a reader device may first perform an initial scan of an area in the inventory environment to obtain an inventory of the tags in the area of the inventory environment (e.g., receive an indication/identification of the tags that are in the area). The initial scan may be over a predefined frequency (e.g., the reader device may transmit interrogation signals into the area over a low frequency or a high frequency), which may trigger the tags capable of receiving the low/high frequency interrogation signals to respond with tag data. The reader device may transmit, to the controller system, the received tag data and signal metadata describing the signals over which the tag data was received. A controller application at the controller system may obtain baseline data describing the tags in the area of the inventory environment based on the tag data and signal metadata. For example, the baseline data may include a count of tags in the area and the tag identifier of the tags in the area. The baseline data may also include calculated locations of each of the tags (e.g., using the signal metadata). This information may provide the baseline data of the tags in the area, which may be used comparatively in the evaluations to determine the optimal frequency of the reader device, as further described below.

The controller application may then transmit an instruction to the reader device to initiate inventory scanning at each of the frequencies supported by the reader device to receive tag data from one or more of the tags detected in the initial scan. Upon receiving this instruction, the reader device may initiate frequency-based inventory scanning at each frequency supported by the reader device, starting with, for example, the low frequency. The reader device may transmit interrogation signals over a low frequency band to activate tags that are within the read zone of the reader device and support low frequency band communications, to receive tag data back from one or more of the tags in the area. As should be appreciated, the read zone of the reader device may vary based on the operating frequency of the reader device (e.g., lower frequencies may result in larger read zones and higher frequencies may enable smaller read zones but may have a higher sensitivity to interference and obstructions). Therefore, the read zone of the tag may be dependent on the operating frequency and power of the reader device, and may be, for example, the entire area of the inventory environment (in which the initial scan was performed), may be a portion of the area, or may overlap with at least a portion of the area.

After transmitting the interrogation signals over the low frequency channel, the one or more tags that are covered by the reader device may be powered up to transmit signals carrying tag data to the reader device. The reader device may receive the signals carrying the tag data from the tags in the read zone and operating over the low frequency band. The reader device may obtain inventory data associated with the low frequency band based on the received tag data. The inventory data may also include signal metadata describing the signals in which the tag data was received.

The reader device may perform similar steps for the mid-frequency band, high frequency band, and mmWave frequency band to obtain inventory data associated with each frequency band. For example, the reader device may transmit interrogation signals over the mid-frequency band, which may activate one or more capable tags in the area and within a read zone of the reader device operating over the mid-frequency band to respond with tag data. The reader device may receive the tag data and generate inventory data associated with the mid-frequency band including the tag data from the tags in the read zone and the corresponding signal metadata. Similarly, the reader device may scan the area over the high frequency band to generate inventory data associated with the high frequency band including the tag data from the capable tags in the read zone and operating over the high-frequency band (and the corresponding signal metadata). Lastly, the reader device may scan the area over the mmWave frequency band to generate inventory data associated with the mmWave frequency band including the tag data from the capable tags in the read zone and operating over the mmWave frequency band (and the corresponding signal metadata).

The reader device may then aggregate the inventory data for each of the supported frequencies into aggregate inventory data. The aggregate inventory data may include the inventory data received across each of the supported frequencies with an indication of the respective supported frequency. The reader device may transmit the aggregate inventory data to the controller system.

The controller application at the controller system may generate KPI data for each of the supported frequencies of the reader device based on the aggregate inventory data (including tag data and signal metadata received over each supported frequency). The KPI data may include KPIs or metrics evaluating a performance of the reader device over each of the supported frequencies. For example, the KPI data may comprise an inventory parameter, a positioning parameter, an interference parameter, a movement parameter, and/or any other parameter defining a KPI of a supported frequency of the reader device.

The inventory parameter may be a value describing an accuracy of the inventory data received at each frequency supported by the reader device. In an embodiment, the controller application may compare inventory data received at each frequency with the baseline data (e.g., compare the quantity of tags detected in the inventory data at each frequency with the quantity of tags indicated in the baseline data) to determine the inventory parameter. The inventory parameter may be a value (e.g., score) indicating the accuracy of the detected inventory data received at each frequency. For example, when the inventory data received at the low frequency indicates a quantity of ten tags, and the baseline data also indicates a quantity of ten tags, the value of the inventory parameter may be 1. On the other hand, when the inventory data received at the low frequency indicates a quantity of five tags, and the baseline data also indicates a quantity of ten tags, the value of the inventory parameter may be 0.5.

The positioning parameter may be a value describing an accuracy of a determined location of each of the tags, calculated for example based on the signal metadata of the signals over which the tag data was received at each frequency supported by the reader device. For example, the controller application may determine a location or perform positioning of each detected tag based on signal metadata of the signal over which tag data from each of the tags was received. The signal metadata may include, for example, a received signal strength indicator (RSSI) of the signal, a time of arrival (ToA) of the signal, an angle of arrival (AoA) of the signal, etc. The controller application may use various positioning methods (e.g., triangulation, trilateration, etc.) using the signal metadata to determine the location of each tag received by the reader device over each of the supported frequencies. In some cases, the baseline data may also include known/refined locations of each of the tags. The controller application may compare the computed location of each tag (across each of the supported frequencies) with the known locations of the same tags indicated in the baseline data to obtain the positioning parameter of each supported frequency. For example, based on the inventory data associated with the low frequency, a difference between the calculated location and the location in the baseline data may be determined for each detected tag. A sum of the differences may be computed, and the sum may be used to determine the positioning parameter of a given supported frequency. For example, the supported frequencies with more accurate locations (e.g., the calculated location being closer to the known location) may have a higher value as the positioning parameter than supported frequencies with less accurate locations, or vice versa.

The interference parameter may be a value describing a level of interference from other signals detected in each signal received from each of the tags over each of the supported frequencies of the reader device. For example, the signal metadata of each signal carrying tag data received by the reader device (over each of the supported frequencies) may indicate the level of interference experienced at the respective signal. The RSSI levels, signal-to-noise ratio (SNR), and error rates may be detected based on the signal metadata to detect interference (e.g., unexpected fluctuations in RSSI or a low SNR may indicate overlapping signals or noise). The controller application may determine the interference parameter as a value based on a level of interference detected in the signal (e.g., the higher the detected interference, the lower the value of the interference parameter or vice versa). The controller application may determine the interference parameter for each signal received over each frequency, and sum the values of the interference parameters in each frequency to obtain the interference parameter for a particular frequency.

Once the KPI data is determined for the reader device based on the aggregate inventory data, the controller application may determine an optimal frequency for the reader device based on the inventory parameter, positioning parameter, and/or interference parameter. In some cases, the controller application may have access to rules defining which KPIs to use for a reader device when determining an optimal frequency for the reader device. For example, a rule may indicate that, only the inventory parameter may be considered in determining the optimal frequency for reader devices in certain locations of the inventory environment, or a rule may indicate that all three of the inventory parameter, positioning parameter, and interference parameter may be considered in determining the optimal frequency for reader devices during certain times. The optimal frequency for a reader device may be for a predefined period of time (which may or may not be adjusted later after new aggregate inventory data is obtained by the reader device). The optimal frequency for a reader device may also be defined in the form of a schedule defining predefined frequencies that are to be set at predefined times/days.

For example, when a rule indicates that only the inventory parameter may be considered for the reader device, the optimal frequency for the reader device may be the supported frequency having the highest (or lowest) inventory parameter. As another example, when a rule indicates that all three of the inventory parameter, positioning parameter, and interference parameter may be considered for the reader device, the optimal frequency for the reader device may be the supported frequency having the highest (or lowest) sum of the inventory parameter, positioning parameter, and interference parameter. Once the controller application determines the optimal frequency, the controller application may transmit an instruction to the reader device to modify an antenna setting and change the frequency of the reader device to the determined optimal frequency.

In some cases, the KPI data may also include a movement parameter. The movement parameter may be based on the aggregate inventory data or inventory data collected by the reader device over the supported frequencies at multiple, consecutive times. For example, the controller application may compare first inventory data associated with the high frequency that was received at a first time with second inventory data associated with the high frequency that was received at a second time after the first time, to determine that a tag in the area has moved locations. The controller application may then generate movement parameters, which may indicate, for example, a direction of movement of the tag, a speed of movement of the tag, whether the tag is exiting the area and/or entering another area, times of entering/exiting areas, etc. The controller application may use the movement parameters to instruct adjacent reader devices to collaborate and coordinate with each other to best track the movement of the tag. For example, when a rule indicates that a movement parameter indicates that a tag is moving in the eastern direction, the rule may instruct the controller application to set an eastern adjacent reader device to an optimal frequency supported by the eastern adjacent reader device that can continue to detect the movement and positioning of the tag (e.g., the mmWave frequency band). In this way, the movement of the tags may also be accounted for in the optimal frequency selection while maintaining collaboration between reader devices that are proximate to one another.

Accordingly, the embodiments disclosed herein enable reader devices to use the most optimal frequency to scan an area of the inventory environment, based on an evaluation of the signals and data received from the tags of each of the frequencies supported by the reader device, which considers the environment surrounding the tags as well. Therefore, the embodiments disclosed herein enable a more efficient use of the resources in the inventory system to more accurately identify and read tags in the inventory environment, thereby increasing inventory system efficiency and capacity.

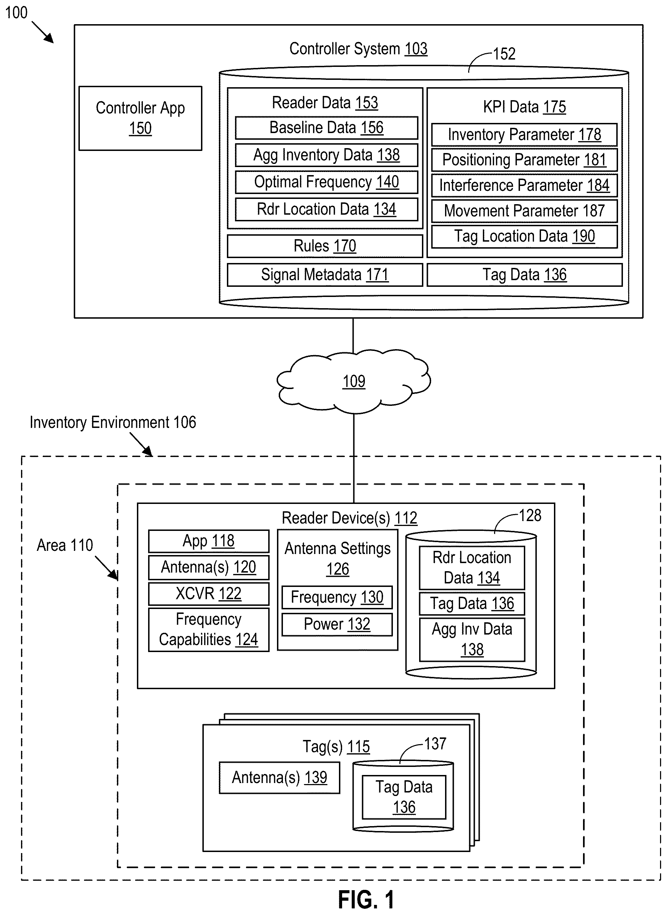

Turning now to FIG. 1, a communication network 100 is described. The communication network 100 includes a controller system 103, an inventory environment 106, and a network 109. The inventory environment 106 includes one or more reader devices 112 and one or more tags 115. The network 109 may be one or more private networks, one or more public networks, or a combination thereof. While the controller system 103 is shown in FIG. 1 as being separate from network 109, in some embodiments, it should be appreciated that the controller system 103 may be part of the network 109. In the embodiment shown in FIG. 1, an inventory system may include the controller system 103, the reader devices 112, and the tags 115.

The tags 115 may each be small devices used in inventory systems to store and transmit data wirelessly to reader devices 112. The tags 115 may each be coupled to (e.g., affixed to) different items and thus may be used for tracking and identifying the items, enabling efficient inventory management and asset tracking in various inventory environments 106 (e.g., warehouses, retail stores, centers, etc.). Each of the tags 115 includes a microchip (e.g., an integrated circuit with processing and memory resources) for data storage and processing, one or more memories, and one or more antennas for communication.

For example, one or more of the tags 115 may include ultra-high frequency (UHF) tags that may operate in a first frequency range. For example, UHF tags may operate in a frequency range of 600 MHz to 3 GHz. For example, the UHF tags may operate over an 860-960 MHz frequency band. One or more of the tags 115 may include mmWave tags, operating at much higher frequencies (e.g., between 24 GHz and 300 GHz). For example, the mmWave tags may operate over a 47 GHz frequency channel. One or more the tags 115 may operate over low frequency bands (e.g., operating over 30-300 kHz), mid-frequency bands (3 MHz to 300 MHz), high frequency bands (e.g., 3-30 MHz), etc. As should be appreciated, the tags 115 may operate over any frequency, which is not limited herein.

As shown in FIG. 1, the tags 115 include an antenna 139 and a data store 137. The antenna 139 may be configured to capture and transmit radio signals over the supported frequency, enabling communication and efficient data transfer. The data store 137 may store tag data 136. The tag data 136 may include a variety of data, such as, for example, a tag identifier (e.g., a unique serial number or electronic product code (EPC) distinguishing different tags 115 from one another), item information (e.g., data about the item to which the tag 115 is attached), manufacturer or supplier information about the item, logistics data, usage data (e.g., records and when and where the tag 115 has been scanned), etc.

The reader devices 112 may each be electronic devices or computer systems. The reader devices 112 may include an application 118, an antenna 120, a radio transceiver 122 (shown as "XCVR 122" in FIG. 1), frequency capabilities 124, antenna settings 126, and a data store 128 (e.g., one or more memories). The application 118 may be instructions stored on a memory of the reader device 112, which when executed by a processor of the reader device, causes the reader device 112 to perform the operations disclosed herein (e.g., transmit interrogation signals, generate aggregate inventory data, transmit aggregate inventory data to the controller system 103, etc.). The antenna 120 is configured to transmit interrogation signals to the tags 115 and receive response signals back from the tags 115. The interrogation signals serve to both power the tags 115 and trigger the tags 115 to respond to the signal with at least a portion of the respective tag data 136. The radio transceiver 122 may include radio equipment enabling the reader device 112 to communicate with other devices in the inventory environment 106 and/or to the controller system 103 over the network 109. In some cases, the reader devices 112 may also include other communication equipment enabling the reader devices 112 to communicate with the tags 115 over various different supported frequencies, as further described herein.

The reader devices 112 may be devices that are capable of communicating with tags 115 over one or more different frequencies (sometimes referred to herein as "supported frequencies" or "frequencies supported by the reader device 112"). The frequency capabilities 124 may indicate the supported frequencies of the reader device (e.g., the frequency bands, sub-bands, channels, etc., over which the reader device 112 is capable of communicating). For example, the frequency capabilities 124 of the reader device 112 discussed in the example above may include low frequency, mid-frequency, high frequency, and mmWave frequency bands, meaning the reader device 112 is capable of communicating signals over low frequency, mid-frequency, high frequency, and mmWave frequency bands.

The antenna settings 126 may refer to the settings of the antenna 120 which the reader device 112 uses to communicate with the tags 115. The antenna settings 126 may include the current transmission frequency 130, which may refer to the frequency band/channel currently configured at the reader device 112 for communicating with the tags 115. The antenna settings 126 may also include power settings 132 (shown in FIG. 1 as "power 132"), which may indicate the amount of transmit power or energy emitted by the antenna 120 to communicate with the tags 115.

The data store 128 may store reader location data 134, tag data 136, and aggregated inventory data 138. The reader location data 134 may refer to the location of the reader device 112, which in some cases may be detected by the reader device 112 (e.g., using a Global Positioning System (GPS) receiver) or may be input by an operator of the reader device 112. The tag data 136 may include the tag data received from each tag 115. As described herein, the reader device 112 may receive inventory data (including tag data 136 and signal metadata) received from each of the tags 115 positioned in a read zone of the reader device 112 over each of the frequencies supported by the reader device 112 (as indicated in the frequency capabilities 124). The aggregate inventory data 138 may include an aggregate of all the inventory data received from all of the tags 115 over each of the supported frequencies of the reader device 112.

As shown in FIG. 1, one or more reader devices 112 and one or more tags 115 (coupled to items) may be positioned within an area 110 of the inventory environment 106. The area 110 of the inventory environment 106 may refer to a zone or region of the inventory environment 106 within which the reader devices 112 may have range. For example, the reader device 112, when operating at a baseline power 132, may have a read range within the area 110 over each of the supported frequencies as indicated in the frequency capabilities 124. Therefore, in one case, the area 110 may refer to a read zone of the reader device 112 operating at a particular frequency 130. In other cases, the read zone the reader device 112 operating at a particular frequency 130 may refer to a portion of the area 110, and/or at least a portion of the read zone may overlap with the area 110.

The controller system 103 may be a device, UE, computer, or computer system, with various types of resources that may be interworked to control the operations of the reader devices 112 to maintain accurate data regarding tags 115 in the inventory environment 106. The controller system 103 may include a processor, a memory, a radio transceiver, and other hardware or software components depending on the type of computer system running the controller system 103. The controller system 103 may include a controller application 150, which may include instructions stored on a memory of the controller system 103 and executable by a processor of the controller system 103. The controller application 150 may communicate with the reader devices 112, as further disclosed herein. For example, controller application 150 may programmatically evaluate the aggregate inventory data 138 received from the reader device 112 to determine the optimal frequency for the reader device 112, as further described herein.

The controller system 103 may also include a data store 152 (e.g., one or more memories, distributed or co-located). The data store 152 may store reader data 153, KPI data 175, rules 170, tag data 136, and signal metadata 171. The reader data 153 may include the reader location data 134 describing the location of a reader device 112 (e.g., in the form of three dimensional or GPS coordinates). The reader data 153 may also include the baseline data 156, the aggregate inventory data 138, and the optimal frequency 140. The baseline data 156 may include data received or generated based on an initial scan of the area 110, and may include, for example, the quantity of tags 115, the location of the tags 115, and/or the tag data 136 (e.g., the tag identifier) from each of the tags 115. The baseline data 156 may be used as a comparison point for the KPI data 175. The aggregate inventory data 138 may be collected by the reader device 112 based on the signals carrying the tag data 136 received over each of the supported frequencies of the reader device 112. The aggregate inventory data 138 may include the inventory data collected at each supported frequency and signal metadata associated with each of the signals received at each supported frequency. The optimal frequency 140 may refer to the optimal frequency determined by the controller application 150 based on the KPI data 175, as further described herein. The optimal frequency 140 may in some cases be a schedule of different frequencies to set at the reader device 112 at different times/dates.

The KPI data 175 may include KPIs or metrics evaluating a performance of the reader device 112 over each of the supported frequencies of the reader device 112. For example, the KPI data 175 may include an inventory parameter 178, a positioning parameter 181, an interference parameter 184, a movement parameter 187, and/or any other parameter defining a KPI of a supported frequency of the reader device 112. The inventory parameter 178 may be a value describing an accuracy of the inventory data received at each frequency supported by the reader device 112. The positioning parameter 181 may be a value describing an accuracy of a determined location of each of the tags 115, calculated for example based on the signal metadata of the signals over which the tag data 136 was received at each frequency supported by the reader device 112. The interference parameter 184 may be a value describing a level of interference from other signals detected in each signal received from each of the tags 115 over each of the supported frequencies of the reader device 112. The movement parameter 187 may indicate data describing a tag 115 detected as being in the motion in the area 110 (e.g., a direction of movement of the tag 115, a speed of movement of the tag 115, whether and/or when the tag 115 is exiting the area and/or entering another area, etc.). The tag location data 190 may include location data, as determined by the controller application 150, based on the signal metadata of the signals over which the tag data 136 was received from the tags 115. As mentioned above, the tag location data 190 may be determined in a variety of ways using a variety of types of signal metadata.

The signal metadata 171 may refer to information derived from the properties of signals received from the tags 115, such as, for example, RSSI, SNR, frequency, ToA, AoA, etc. The signal metadata 171 may provide insights that may be used for interference detection, location tracking, and performance optimization of tags 115. The rules 170 may refer to logic or code defining, for example, the types of KPI data 175 (e.g., the inventory parameter 178, positioning parameter 181, interference parameter 184, movement parameter 187, and/or other parameters) to use when determining an optimal frequency 140 for the reader device 112. The rules 170 may also include logic or code defining methods for determining an optimal frequency 140 for second reader devices 112 (e.g., adjacent reader devices) based on the KPI data 175 of a first reader device 112. For example, a rule 170 may define the optimal frequency 140 for an adjacent reader device 112 based on movement parameters 187 of a detected tag 115 in motion.

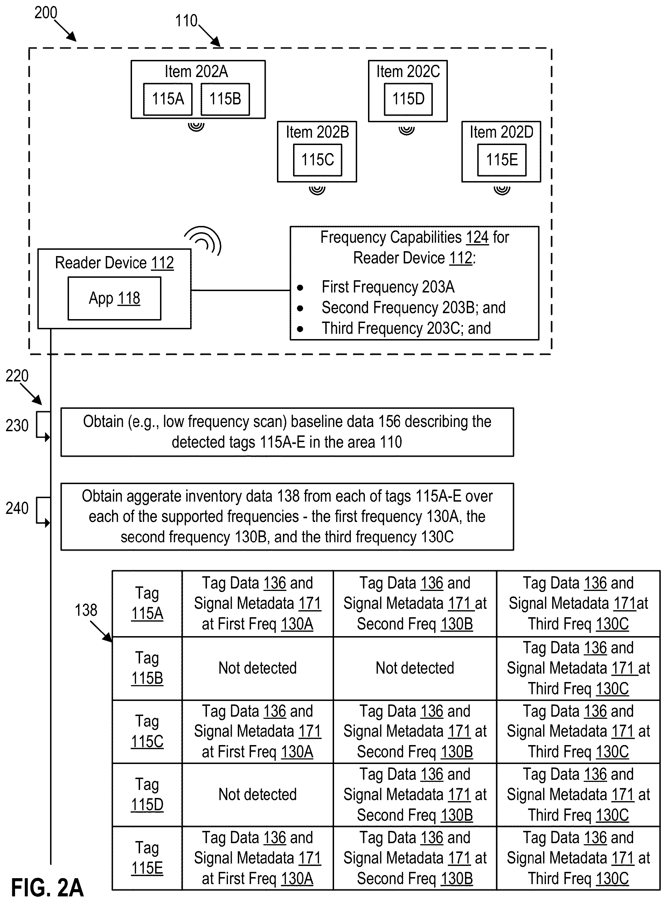

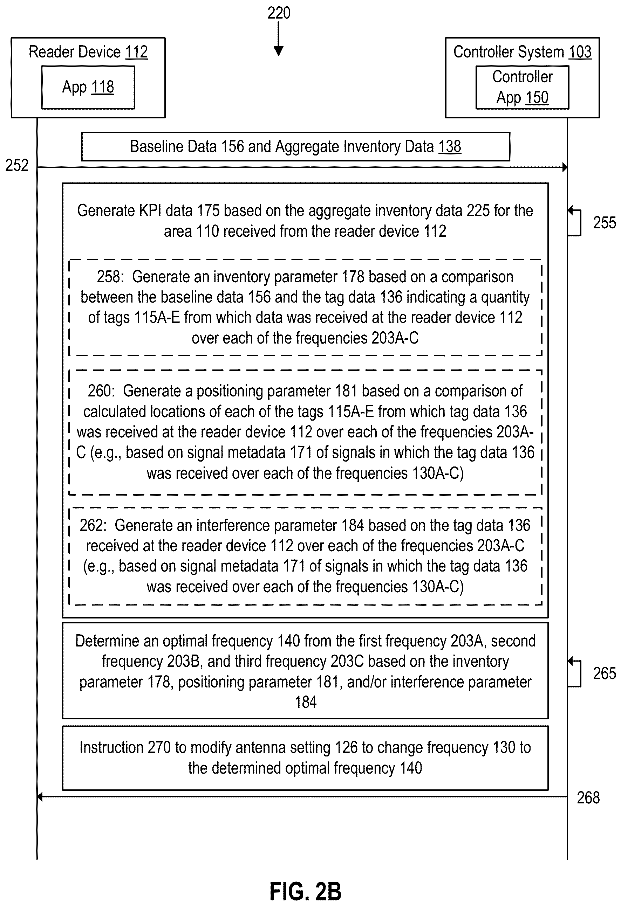

Referring now to FIGS. 2A and 2B, shown are diagrams illustrating an area 110 of an inventory environment 106 and applying a method of optimal frequency configuration at reader devices 112 according to various embodiments of the disclosure. Specifically, FIG. 2A illustrates a diagram 200 depicting an area 110 of an inventory environment 106 including a reader device 112 and four items 202A, 202B, 202C, and 202D, and operations 230 and 240 of a method 220 for optimal frequency configuration at the reader device 112. FIG. 2B illustrates a continuation of the method 220 for optimal frequency configuration at the reader device 112 further including operations performed by the controller system 103.

Turning now specifically to FIG. 2A, the area 110 is illustrated at the top as including four items 202A, 202B, 202C, and 202D, and the reader device 112. Items 202A-D may be detachably attached to one or more different types of tags 115 (e.g., RFID tags). As shown in FIG. 2A, item 202A may be affixed to two tags 115A and 115B (e.g., tag 115A may be a UHF tag operating in a frequency range of 600 MHz to 2 (or 3) GHz, and tag 115B may be a mmWave tag operating in a frequency range between 24 GHz to 300 GHz). Item 202B may include tag 115C (e.g., a UHF tag), item 202C may include tag 115D (e.g., a UHF tag), and item 202D may include a tag 115E (e.g., a UHF tag).

The reader device 112 in the area 110 may include the application 118, which may perform the operations of method 220, as further described below. The frequency capabilities 124 for the reader device 112 (e.g., the frequencies supported by the reader device 112, over which the reader device 112 is capable of communicating with the tags 115A-E) includes a first frequency 203A, a second frequency 203B, and a third frequency 203C. For example, the first frequency 203A may be a low frequency band, the second frequency 203B may be a UHF band, and the third frequency 203C may be a mmWave frequency band. However, it should be appreciated that the first frequency 203A, second frequency 203B, and third frequency 203C may be any frequency channel, band, or sub-band.

The application 118 of the reader device 112 may perform method 220 by communicating radio frequency signals with the tags 115A-E on the items 202A-D. At the outset, reader device 112 may be preset to operate at a predefined frequency 130, which may not have any relation to the tags 115A-E or the area 110 (e.g., the obstacles/objects/interference in the area 110). Method 220 may be performed to modify the antenna setting 126 of the reader device 112 to instead set the frequency 130 to an optimal frequency 140, determined based on KPI data 175 obtained for the reader device 112.

Method 220 may be initiated based on various trigger events, such as, for example, receiving a request from an operator of the reader device 112, receiving a request from the controller system 103, receiving an indication of a change to the area 110 (e.g., addition of new tags 115, addition of new objects/obstructions, addition of new reader devices 112/antennas 120 proximate to the reader device, etc.), detecting a time indicated in a schedule, etc. In this way, the method 220 may be performed in response to a variety of different trigger events or requests.

Method 220 may begin with the application 118 at the reader device 112 performing operation 230. At operation 230, the application 118 may obtain baseline data 156 describing the detected tags 115A-E in the area 110. For example, the application 118 may instruct the reader device 112 to perform an initial scan of the area 110 by emitting interrogation signals into the area 110 at a predefined frequency (e.g., at a low frequency between 30-300 kHz). Using low frequency signals for the initial scan may provide several benefits, such as, for example, the ability to penetrate materials like metal and water better, being less prone with interferences from noise and other signals, etc. However, in other embodiments, the initial scan may be performed in other frequencies (e.g., mid-frequency bands, high frequency bands, UHF bands, mmWave frequency bands, etc.) to obtain the baseline data 156. In an embodiment, the frequency selected for the initial scan may be such that the read zone of the reader device 112 operating at that frequency is substantially the same as the area 110 (or closest to the area 110).

The emitted interrogation signals may energize all of the tags 115A-E in the area 110 to respond with signals carrying respective tag data 136, which may be received by the reader device 112 and stored at the data store 128. The reader device 112 may then determine the baseline data 156 based on the tag data 136 received from all of the tags 115A-E and signal metadata 171 describing the signals carrying the tag data 136. For example, the baseline data 156 may include an aggregation of all of the tag data 136 received during the initial scan, thereby providing a count of tags 115A-E in the area 110 and the tag identifier of the tags 115A-E in the area 110. In another embodiment, the application 118 may transmit the tag data 136 received from all of the tags 115A-E to the controller system 103 for the controller application 150 to determine the baseline data 156 and store the baseline data 156 with the reader data 153 of the reader device 112. The controller application 150 may also determine the location of all of the detected tags 115A-E based on the signal metadata 171. Regardless, the baseline data 156 provides a baseline or a standard of comparison that may be used to determine the KPI data 175 for all of the supported frequencies of the reader device 112 (i.e., the first frequency 203A, second frequency 203B, and third frequency 203C).

Once the baseline data 156 is obtained, the reader device 112 may perform consecutive scans of the area 110 (or at least a portion of the area 110) using each of the supported frequencies 203A, 203B, and 203C to receive tag data 136 from any tag 115A-E detected during the scan using each of the supported frequencies 203A, 203B, and 203C. For example, the reader device 112 may first perform a scan of the area 110 (or a portion of the area 110) by emitting interrogation signals over the first frequency 203A. The portion of the area 110 covered by the scan (e.g., the read zone of the reader device) operating at the first frequency 203A may be based on the first frequency 203A and the power 132 used during transmission of the interrogation signals. Therefore, the scan using the first frequency 203A may result in the detection of no tags 115A-E (i.e., no tags 115A-E are detected during the scan), some of the tags 115A-E (i.e., only a subset of the tags 115A-E are detected during the scan), or all of the tags 115A-E (i.e., the scan was able to detect all of the tags 115A-E), depending on the read zone or portion of the area 110 covered by the scan. In addition, the tags 115A-E may only be capable of responding to signals of the frequency supported by the tag 115A-E (e.g., the mmWave tag 115B may only be capable of responding to signals received in the mmWave frequency band). Therefore, tags 115A-E that do not support the first frequency 203A may also not be detected during the scan.

Therefore, the tags 115A-E that detected/received the interrogation signals may be energized by the interrogation signals and respond with the respective tag data 136. The reader device 112 may receive signals carrying the tag data 136 from the tags 115A-E that received the interrogation signals. The reader device 112 may store the tag data 136 of the tags 115A-E that received the interrogation signals and signal metadata 171 describing the signals in which the tag data 136 was received, in association with an indication of the first frequency 203A (as inventory data for the first frequency 203A). For example, the scan using the first frequency 203A may have resulted in the detection of tags 115A, 115C, and 115E only. The inventory data associated with the first frequency 203A may thus only include the tag data 146 received from 115A, 115C, and 115E and the corresponding signal metadata 171, and this inventory data may be stored in the data store 128.

The aforementioned operations for scanning the area 110 (or at least a portion of the area 110) at each supported frequency may be repeated by the reader device 112 for the second frequency 203A and the third frequency 203C. That is, the reader device 112 may emit interrogation signals into at least a portion of the area 110 over the second frequency 203B. The tags 115A-E that received the interrogation signals over the second frequency 203B may respond with respective tag data 136, which may be received by the reader device 112 and stored at the data store 128 (as inventory data for the second frequency 203B). In this example, only tags 115A, 115C, 115D, and 115E may have received the interrogation signals over second frequency 203B. Therefore, inventory data associated with the second frequency 203B may thus only include the tag data 146 received from 115A, 115C, 115D, and 115E and the corresponding signal metadata 171, and this inventory data may be stored in the data store 128. Similarly, the reader device 112 may emit interrogation signals into at least a portion of the area 110 over the third frequency 203C. The tags 115A-E that received the interrogation signals over the third frequency 203C may respond with respective tag data 136, which may be received by the reader device 112 and stored at the data store 128 (as inventory data for the third frequency 203C). In this example, all the tags 115A, 115B, 115C, 115D, and 115E may have received the interrogation signals over the third frequency 203C. Therefore, the inventory data associated with the third frequency 203C may thus include the tag data 146 received from 115A, 115B, 115C, 115D, and 115E and the corresponding signal metadata 171, and this inventory may be stored in the data store 128.

At operation 240, the application 118 may obtain aggregate inventory data 138 including tag data 136 received from the detected tags 115A-E from each scan over each of the supported frequencies 203A-C (or including the inventory data obtained from each scan over each of the supported frequencies 203A-C). As mentioned above, inventory data associated with the first frequency 203A may include the tag data 136 received from 115A, 115C, and 115E and the corresponding signal metadata 171, the inventory data associated with the second frequency 203B may include the tag data 136 received from 115A, 115C, 115D, and 115E and the corresponding signal metadata 171, the inventory data associated with the third frequency 203C may include the tag data 136 received from 115A, 115B, 115C, 115D, and 115E and the corresponding signal metadata 171. The aggregate inventory data 138 may include the inventory data associated with each of the first frequency 130A, 130B, and 130C, as shown in FIG. 2A.

Turning now to FIG. 2B, the discussion on method 220 continues with operation 252. As shown in FIG. 2B, method 220 may be performed by not only the reader device 112, but also involves operations performed by the controller system 103, as further described below.

At operation 252, the reader device 112 may transmit the baseline inventory data 156 and the aggregate inventory data 138 to the controller system 103 (either simultaneously, or the baseline inventory data 156 may be sent before the aggregate inventory data 138). The controller application 150 may store the aggregate inventory data 138 with the reader data 153 associated with the reader device 112.

At operation 255, the controller application 150 may generate KPI data 175 based on the aggregate inventory data 225 for the area 110 received from the reader device 112. The operation 255 may include various sub-operations 258, 260, and 262, one or more which may be performed by the controller application 150 to generate the KPI data 175. In other words, in various embodiments, one or more of sub-operations 258, 260, and 262 may be performed by the controller application 150 to generate the KPI data 175. The KPI data 175 may include KPIs or metrics evaluating a performance of the reader device 112 over each of the supported frequencies (i.e., the first frequency 203A, the second frequency 203B, and the third frequency 203C).

At sub-operation 258, the controller application 150 may generate an inventory parameter 178 for each of the supported frequencies 203A, 203B, and 203C of the reader device 112. The inventory parameter 178 may be a value describing an accuracy of the tag data 136 (or inventory data) received at a respective supported frequency 203A, 203B, and 203C of the reader device 112. In an embodiment, an inventory parameter 178 may be generated (e.g., calculated, determined, generated, etc.) for each of the supported frequencies 203A, 203B, and 203C. For example, the controller application 150 may compare tag data 136 (or inventory data) received at each frequency 203A, 203B, and 203C with the baseline data 156 (e.g., compare the quantity of tags 115A-E detected in the tag data 136 at each frequency 203A, 203B, and 203C with the quantity of tags 115A-E indicated in the baseline data 156) to determine the inventory parameter 178 for each frequency 203A, 203B, and 203C. In this way, the inventory parameter 178 may be a value (e.g., score) indicating the accuracy of the detected inventory data received at each frequency 203A, 203B, and 203C. Continuing with the example described above with reference to FIG. 2A, the inventory parameter 178 of the first frequency 130A may be the lowest (because only three of the five tags 115A-E were detected), the inventory parameter 178 of the second frequency 130B may be the next highest (because four of the five tags 115A-E were detected), and the inventory parameter 178 of the third frequency 130C may be the highest (because all five tags 115A-E were detected).

At sub-operation 260, the controller application 150 may generate a positioning parameter 181 for each of the supported frequencies 203A, 203B, and 203C of the reader device 112. The positioning parameter 181 may be a value describing an accuracy of a determined location (e.g., the tag location data 190) of each of the tags 115A-E, calculated for example based on the signal metadata 171 of the signals over which the tag data 136 was received at each supported frequency 203A, 203B, and 203C. In an embodiment, a positioning parameter 181 may be generated for each of the supported frequencies 203A, 203B, and 203C. For example, the controller application 150 may determine a location or perform positioning of each detected tag 115A-E based on signal metadata 171 of the signal over which tag data 136 from each of the tags 115A-E was received. The controller application 150 may use various positioning methods (e.g., triangulation, trilateration, etc.) using the signal metadata 171 to determine the location of each tag 115A-E received by the reader device 112 over each of the supported frequencies 203A, 203B, and 203C. In some cases, the baseline data 156 may also include calculated locations of each of the tags 115A-E. The controller application 150 may compare the computed location of each tag 115A-E (across each of the supported frequencies 203A, 203B, and 203C) with the locations of the same tags 115A-E indicated in the baseline data 156 to obtain the positioning parameter 181 of each supported frequency 203A, 203B, and 203C. For example, the supported frequencies 203A, 203B, and 203C with more accurate locations (e.g., the calculated location being closer to the known location) may have a higher value as the positioning parameter 181 than supported frequencies 203A, 203B, and 203C with less accurate locations, or vice versa.

At sub-operation 262, the controller application 150 may generate an interference parameter 184 for each of the supported frequencies 203A, 203B, and 203C of the reader device 112. The interference parameter may be a value describing a level of interference from other signals detected in each signal received from each of the tags 115A-E over each of the supported frequencies 203A, 203B, and 203C of the reader device 112. In an embodiment, an interference parameter 184 may be generated for each of the supported frequencies 203A, 203B, and 203C. For example, the signal metadata 171 of each signal carrying tag data 136 received by the reader device 112 (over each of the supported frequencies 203A, 203B, and 203C) may be used to determine or compute the level of interference experienced at the respective signal. The controller application 150 may use, for example, the RSSI levels, the SNR, and error rates from the signal metadata 171 to detect interference (e.g., unexpected fluctuations in RSSI or a low SNR may indicate overlapping signals or noise) in signals. The controller application 150 may determine the interference parameter 184 as a value based on a level of interference detected in the signal (e.g., the higher the detected interference, the lower the value of the interference parameter 184 or vice versa). The controller application 150 may determine the interference parameter 184 for each signal received over each frequency 203A, 203B, and 203C, and sum the values of the interference parameters 184 in each frequency 203A, 203B, and 203C to obtain the interference parameter 184 for a particular frequency 203A, 203B, and 203C.

While only three types of KPI parameters (e.g., the inventory parameter 178, positioning parameter 181, and interference parameter 184) are described as part of the KPI data 175 in FIG. 2B, it should be appreciated that any and all other types of KPI parameters may also be generated based on the signals and data received from a reader device 112. At operation 265, the controller application 150 may determine an optimal frequency 140 for the reader device 112 (from the supported first frequency 203A, second frequency 203B, and third frequency 203C) based on the inventory parameter 178, positioning parameter 181, and/or interference parameter 184. In some cases, the controller application 150 may have access to rules 170 defining which KPI parameters (e.g., which of the inventory parameter 178, positioning parameter 181, and/or interference parameter 184) to use when determining an optimal frequency 140 for the reader device 112. For example, in some case only the inventory parameter 178 may be considered in determining the optimal frequency 140 for reader devices 112 in certain locations of the inventory environment 106. In other cases, all three of the inventory parameter 178, positioning parameter 181, and interference parameter 184 may be considered in determining the optimal frequency 140 for reader devices 112 during certain times of the day, days of the week, and/or months of the year (e.g., based on a schedule). The optimal frequency 140 for a reader device 112 may be for a predefined period of time (which may or may not be adjusted later after new aggregate inventory data is obtained by the reader device). The optimal frequency 140 for a reader device 112 may also be defined in the form of a schedule, in which the schedules defines certain times, days, months, and/or a combination of each in which certain frequencies 203A, 203B, or 203C are to be used for tag identification and inventory management. For example, the schedule may indicate that the first frequency 203A should be used during the hours of 9am to 12pm, the second frequency 203B should be used during the hours of 12pm to 3pm, and the third frequency 203C should be used during the hours of 3pm to 6pm.

For example, when a rule 170 indicates that only the inventory parameter 178 may be considered for the reader device 112, the optimal frequency 140 for the reader device 112 may be the supported frequency 203A, 203B, or 203C having the highest (or lowest) inventory parameter 178. As another example, when a rule 170 indicates that all three of the inventory parameter 178, positioning parameter 181, and interference parameter 184 may be considered for the reader device 112, the optimal frequency 140 for the reader device 112 may be the supported frequency 203A, 203B, or 203C having the highest (or lowest) sum of the inventory parameter 178, positioning parameter 181, and interference parameter 184. Once the controller application 150 determines the optimal frequency 140, the controller application 150 may perform operation 268 and transmit an instruction 270 to the reader device 112 to modify an antenna setting 126 and change the current frequency 130 of the reader device 112 to the determined optimal frequency 140.

The reader device 112 may, in response to receiving the instruction 270, set or modify the current frequency 130 to be the optimal frequency 140 indicated in the instruction 270. When the optimal frequency 140 is in the form of a schedule indicating different ones of the supported frequencies 203A, 203B, and 203C at different times, the application 118 may program the schedule at the reader device 112. In this way, the application 118 may programmatically adjust, modify, or set the current frequency 130 of the reader device 112 to be the frequency 203A, 203B, or 203C for a given time based on the schedule.

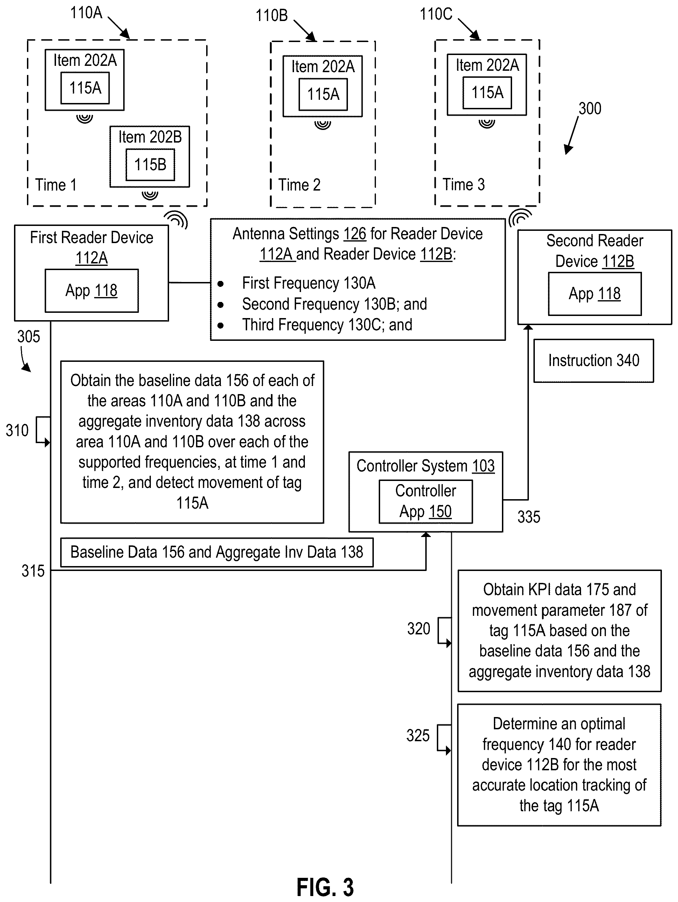

Referring now to FIG. 3, shown is a diagram 300 illustrating multiple areas 110A, 110B, and 110C of an inventory environment 106, and a method 305 for detecting movement of a tag 115 through the areas 110A-C for frequency optimization at the reader device 112 and collaboration with other reader devices 112. In FIG. 3, area 110A includes item 202A that is detachably coupled to tag 115A and item 202B that is detachably coupled to tag 115B, both at time 1 (a first time). As shown in FIG. 3, item 202A and tag 115A moves to area 110B at time 2 (a second time after the first time), and moves to (or may be projected to move to) area 110C at time 3 (a third time after the second time). The movement of the tag 115A through the areas 110A, 110B, and 110C may be detected and evaluated to ensure that reader devices 112 that may scan the moving tag 115A may use the optimal frequency 140 based on the movement of the tag 115A. While only one or two tags 115 are shown in the areas 110A-C of FIG. 3, it should be appreciated that an area 110 may include any number of tags 115, and inventory environment may include any number of tags 115.

To this end, method 305 may be performed to evaluate to the movement of the tag 115A and identify the optimal frequencies 140 for the first reader device 112A and the second reader device 112B. For example, the first reader device 112A may be capable of/positioned in a manner to adequately scan at least a portion of areas 110A and 110B (depending on frequency 130 and power 132), and the reader device 112B may be capable of/positioned in a manner to adequately scan at least a portion of area 110C (also depending on frequency 130 and power 132).

Method 305 may begin with operation 310. At operation 310, the application 118 at the first reader device 112A may obtain the baseline data 156 of each of the areas 110A and the 110B. The process of obtaining the baseline data 156 may be similar to that described above with reference to operation 210 of FIG. 2A. At operation 310, the application 118 at the first reader device 112A may also obtain aggregate inventory data 138 describing the tags 115A-B detected in area 110A over each of the supported frequencies of the first reader device 112A at time 1, and then obtain aggregate inventory data 138 describing the tag 115A detected in area 110B over each of the supported frequencies of the first reader device 112A at time 2. The process of obtaining the aggregate inventory data 138 may be similar to that described above with reference to operation 240 of FIG. 2A.

At operation 315, the application 118 at the first reader device 112A may transmit, to the controller system 103, the baseline data 156 of the areas 110A and 110B, the aggregate inventory data 138 describing the tags 115A-B detected in area 110A over each of the supported frequencies of the first reader device 112A at time 1, and the aggregate inventory data 138 describing the tag 115A detected in area 110B over each of the supported frequencies of the first reader device 112A at time 2. At operation 320, the controller application 150 may obtain the KPI data 175 for the first reader device 112A with respect to area 110A based on the baseline data 156 of the area 110A and the aggregate inventory data 138 detected in area 110A over each of the supported frequencies of the first reader device 112A. The controller application 150 may also obtain the KPI data 175 for the first reader device 112A with respect to area 110B based on the baseline data 156 of the area 110B and the aggregate inventory data 138 detected in area 110B over each of the supported frequencies of the first reader device 112A.

At operation 320, the obtained KPI data 175 and movement parameter 187 of tag 115A based on the baseline data 156 and the aggregated inventory data 138. The controller application 150 also determine the movement parameter 187 of tag 115A based on an evaluation of both the aggregate inventory data 138 detected in area 110A and the aggregate inventory data 138 detected in area 110B. For example, the aggregate inventory data 138 detected in area 110A may indicate that the tag 115A was present in the area 110A at the time 1, and the aggregate inventory data 138 detected in area 110B may indicate that the tag 115A was present in the area 110B at time 2. Based on this, the controller application 150 may determine the movement parameters 187 of the moving tag 115A. As mentioned above, the movement parameters 187 may indicate data regarding the movement of the tag 115A. For example, the movement parameter 187 may include a direction of movement of the tag 115A (which may be determined based on known locations of the areas 110A and 110B), the speed of movement of the tag 116A (which may be determined based on times of detecting the tag 115A in the different areas 110A and 110B), etc. The movement parameter 187 may also include the time of exiting the area 110A, the time of entering the area 110B, the projected time of entering the area 110C (time 3), all of which may be determined based on times of detecting the tag 115A in the different areas 110A and 110B/the speed of movement/the direction of movement.

The controller application 150 may use the movement parameters 187 to instruct adjacent reader devices (e.g., the second reader device 112B) to collaborate and coordinate with each other to best detect the movement of the tag 115A. For example, when a rule 170 indicates that a movement parameter 187 indicates that a tag 115A is moving in the eastern direction, the rule 170 may instruct the controller application 150 to set an eastern adjacent reader device 112 to an optimal frequency 140 supported by the eastern adjacent reader device 112 that can continue to most accurately and efficiently detect the movement and positioning of the moving tag 115A (e.g., in this case, the optimal frequency 140 supported may be the mmWave frequency band).

In this way, at operation 325, the controller application 150 may determine an optimal frequency 140 for reader device 112B (which may be an adjacent reader device 112, that is capable of and positioned in a manner to detect movement of the tag 115A in the area 110C, and which may be in the projected direction of movement of the tag 115A). The selected optimal frequency 140 may be one that is most likely to accurately detect the precise location/movement the tag 115A, in which the signals of that optimal frequency 140 may be used to most accurately determine a location of the tag 115A. For example, the optimal frequency 140 may be a mmWave frequency (e.g., 24 GHz to 300 GHz), which may be ideal for movement detection due to the characteristics of mmWave frequencies (e.g., high spatial resolution allowing for precise detection of small positional changes in fine motion, wide bandwidths that can be used to detect rapid changes in signal reflections caused by movement, etc.).

At operation 335, the controller application 150 may transmit an instruction 340 to the second reader device 112B, in which the instruction 340 may be for the second reader device 112B to modify an antenna setting 126 and change the frequency 130 of the reader device 112 to the determined optimal frequency 140 to best detect movement/locations of the tag 115A. The determined optimal frequency 140 in this case may be for a period of time based on the movement parameter 187 indicating a direction/speed of the tag 115A such that the tag 115A may be expected to be in the area 110C for a particular period of time. The second reader device 112B may, in response to receiving the instruction 340, set or modify the current frequency 130 to be the optimal frequency 140 indicated in the instruction 340.

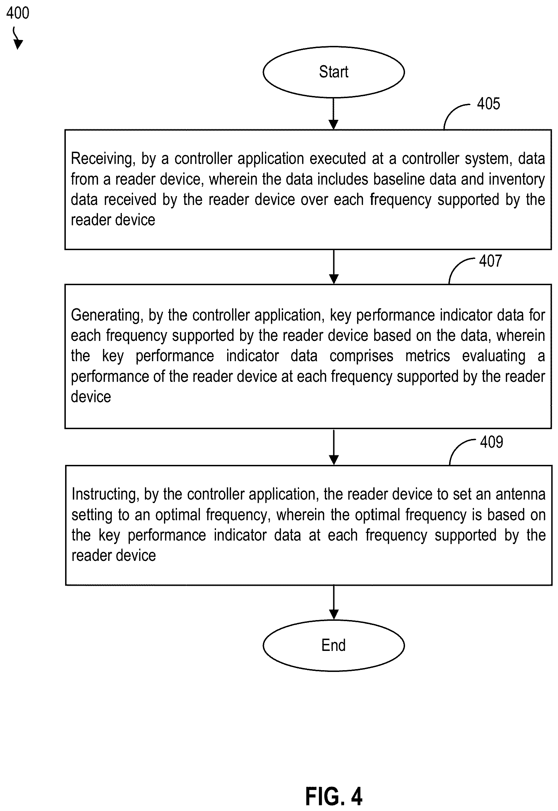

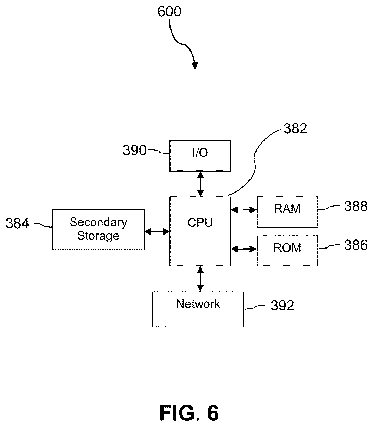

Turning now to FIG. 4, shown is a method 400 for optimal frequency configuration at reader devices 112 using the inventory system of FIG. 1 according to various embodiments of the disclosure. In embodiments, the method 400 may be implemented using a computer system with components as shown in FIG. 6. As illustrated, method 400 of FIG. 4 includes a number of enumerated operations, but embodiments of the operations in FIG. 4 may include additional operations before, after, and in between the enumerated operations. In some embodiments, one or more of the enumerated operations may be omitted or performed in a different order. Method 400 may be performed by an application executing at a computer system, and the application may refer to the controller application 150 at the controller system 103, and/or the application 118 at the reader devices 112.

At step 405, method 400 comprises receiving, by a controller application 150 executed at a controller system 103, data from a reader device 112. In an embodiment, the data includes baseline data 156 and (aggregate) inventory data 138 received by the reader device 112 over each frequency supported by the reader device 112. At step 407, method 400 comprises generating, by the controller application 150, KPI data 175 for each frequency supported by the reader device 112 based on the data. In an embodiment, the KPI data 175 comprises metrics evaluating a performance of the reader device 112 at each frequency supported by the reader device 112. At step 409, method 400 comprises instructing, by the controller application 150, the reader device 112 to set an antenna setting 126 to an optimal frequency 140. In an embodiment, the optimal frequency 140 is based on the KPI data 175 at each frequency supported by the reader device.

Method 400 may further comprise additional attributes and/or steps not explicitly shown in FIG. 4. In an embodiment, receiving the data from the reader device 112 comprises receiving, by the controller application 150, baseline data 156 describing a plurality of tags 115 detected in an area 110 of an inventory environment 106 from the reader device 112, in which the baseline data 156 comprises a quantity of the tags 115 detected in the area 110 and an identifier associated with each of the tags 115. In an embodiment, receiving the data from the reader device 112 comprises receiving, by the controller application 150, aggregate inventory data 138 from the reader device 112, in which the aggregate inventory data 135 comprises tag data 136 from one or more of the tags 115 in an area 110 and collected by the reader device 112 at each frequency supported by the reader device 112.

In an embodiment, the KPI data 175 comprises an inventory parameter 178, which may be value describing an accuracy of tag data 136 counting tags 115 detected in an area 110 and received at each frequency supported by the reader device 112. In an embodiment, the KPI data 175 comprises a positioning parameter 181, which may be a value describing an accuracy of a calculated location of each tag 115 detected in an area 110 based on tag data 136 of the each tag 115 detected in the area and received over each frequency supported by the reader device 112. In an embodiment, the KPI data 175 comprises an interference parameter 184, which may be a value describing a level of interference detected in each signal received from each tag 115 detected in an area 110 over each frequency supported by the reader device 112. In an embodiment, the KPI data 175 comprises a movement parameter 187, which may indicate whether movement of one or more tags 115 is detected in an area 110 and at least one of a direction of the movement, a speed of the movement, when the tag 115 exits or is predicted to exit the area 110, or when the 115 tag enters or is predicted to enter another area 110 covered by another reader device 112. In an embodiment, method 400 may further comprise determining, by the controller application 150, the optimal frequency 140 based on a policy 170 that indicates one or more parameters of the KPI data 175 that is to be used to determine the optimal frequency 140 for the reader device 112.

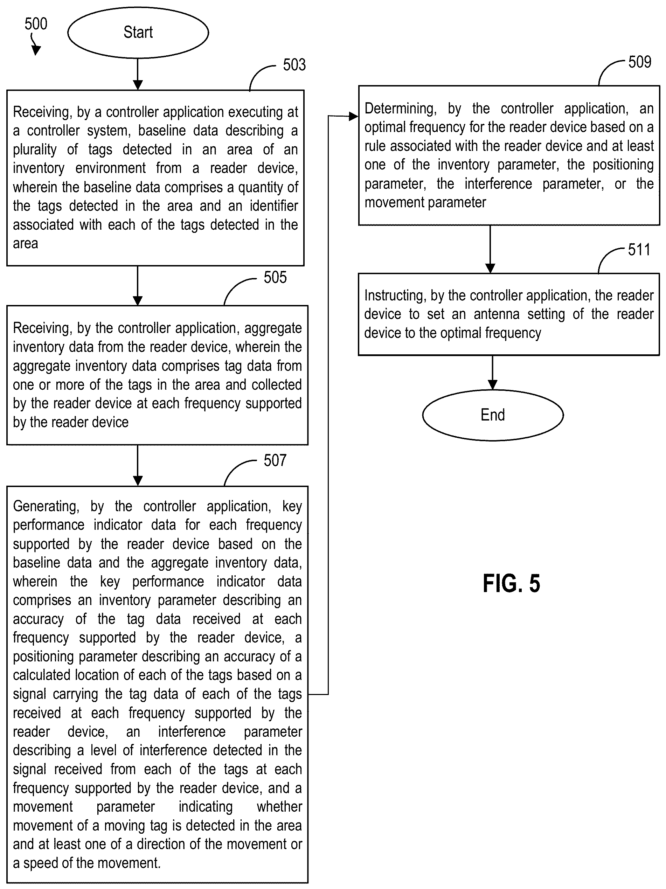

Turning now to FIG. 5, shown is another method 500 for optimal frequency configuration at reader devices 112 using the inventory system of FIG. 1 according to various embodiments of the disclosure. In embodiments, the method 500 may be implemented using a computer system with components as shown in FIG. 6. As illustrated, method 500 of FIG. 5 includes a number of enumerated operations, but embodiments of the operations in FIG. 5 may include additional operations before, after, and in between the enumerated operations. In some embodiments, one or more of the enumerated operations may be omitted or performed in a different order. Method 500 may be performed by an application executing at a computer system, and the application may refer to the controller application 150 at the controller system 103, and/or the application 118 at the reader devices 112.

At step 503, method 500 comprises receiving, by a controller application 150 executing at a controller system 103, baseline data 156 describing a plurality of tags 115 detected in an area 110 of an inventory environment 106 from a reader device 112. In an embodiment, the baseline data 156 comprises a quantity of the tags 115 detected in the area 110 and an identifier associated with each of the tags 115 detected in the area 110. At step 505, method 500 comprises receiving, by the controller application 105, aggregate inventory data 138 from the reader device 112. In an embodiment, the aggregate inventory data 138 comprises tag data 136 from one or more of the tags 115 in the area 110 and collected by the reader device 112 at each frequency supported by the reader device 112.

At step 507, method 500 comprises generating, by the controller application 150, KPI data 175 for each frequency supported by the reader device based on the baseline data 156 and the aggregate inventory data 138. In an embodiment, wherein the KPI data 175 comprises at least one of an inventory parameter 178 describing an accuracy of the tag data received at each frequency supported by the reader device, a positioning parameter 181 describing an accuracy of a calculated location of each of the tags 115 based on a signal carrying the tag data 136 of each of the tags 115 received at each frequency supported by the reader device 112, an interference parameter describing a level of interference detected in the signal received from each of the tags at each frequency supported by the reader device, and/or a movement parameter indicating whether movement of a moving tag is detected in the area and at least one of a direction of the movement or a speed of the movement.

At step 509, method 500 comprises determining, by the controller application 150, an optimal frequency 140 for the reader device 112 based on a rule 170 associated with the reader device 112 and at least one of the inventory parameter 178, the positioning parameter 181, the interference parameter 184, or the movement parameter 187. At step 511, method 500 comprises instructing, by the controller application 150, the reader device 112 to set an antenna setting 126 of the reader device 112 to the optimal frequency 140.

Method 500 may further comprise additional attributes and/or steps not explicitly shown in FIG. 5. In an embodiment, the rule 170 indicates that only the inventory parameter 178 at each frequency supported by the reader device 112 is to be evaluated in determining the optimal frequency 140 for the reader device 112, and the rule 170 further indicates that a frequency with a highest inventory parameter 178 is selected as the optimal frequency 140 for the reader device 112. In an embodiment, the rule 170 indicates that the inventory parameter 178 and the interference parameter 184 at each frequency supported by the reader device 112 are to be evaluated in determining the optimal frequency 140 for the reader device 112, and the rule 170 further indicates that a frequency with a greatest sum of the inventory parameter 178 and the interference parameter 184 is selected as the optimal frequency 140 for the reader device 112. In an embodiment, the rule indicates that the inventory parameter 178, the positioning parameter 181, the interference parameter 184 at each frequency supported by the reader device 112 are to be evaluated in determining the optimal frequency 140 for the reader device 112. In an embodiment, the rule 170 indicates that when the movement parameter 187 indicates that the moving tag tag 115 is detected as moving in the area 110, the optimal frequency 140 of the reader device 112 and an adjacent reader device 112 may be the highest frequency supported by the reader device 112 and the adjacent reader device 112 (e.g., a mmWave wave frequency).

FIG. 6 illustrates a computer system 600 suitable for implementing one or more embodiments disclosed herein. In an embodiment, the controller system 103, reader device 112, etc., may each be implemented as the computer system 600. The computer system 600 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 600, at least one of the CPU 382, the RAM 388, and the ROM 386 are changed, transforming the computer system 600 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 600 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 600 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 600 to provide the functionality of a number of servers that is not directly bound to the number of computers in the computer system 600. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 600, at least portions of the contents of the computer program product to the secondary storage 384, to the ROM 386, to the RAM 388, and/or to other non-volatile memory and volatile memory of the computer system 600. The processor 382 may process the executable instructions and/or data structures in part by directly accessing the computer program product, for example by reading from a CD-ROM disk inserted into a disk drive peripheral of the computer system 600. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 600.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 600 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of optimal frequency configuration at reader devices for reader device coordination, wherein the method comprises:
receiving, by a controller application executing at a controller system, baseline data describing a plurality of tags detected in an area of an inventory environment from a reader device, wherein the baseline data comprises a quantity of the tags detected in the area and an identifier associated with each of the tags detected in the area;
receiving, by the controller application, aggregate inventory data from the reader device, wherein the aggregate inventory data comprises tag data from one or more of the tags in the area and collected by the reader device at each frequency supported by the reader device;
generating, by the controller application, key performance indicator data for each frequency supported by the reader device based on the baseline data and the aggregate inventory data, wherein the key performance indicator data comprises:
an inventory parameter describing an accuracy of the tag data received at each frequency supported by the reader device,
a positioning parameter describing an accuracy of a calculated location of each of the tags based on a signal carrying the tag data of each of the tags received at each frequency supported by the reader device,
an interference parameter describing a level of interference detected in the signal received from each of the tags at each frequency supported by the reader device, and
a movement parameter indicating whether movement of a moving tag is detected in the area and at least one of a direction of the movement or a speed of the movement;
determining, by the controller application, an optimal frequency for the reader device based on a rule associated with the reader device and at least one of the inventory parameter, the positioning parameter, the interference parameter, or the movement parameter; and
instructing, by the controller application, the reader device to set an antenna setting of the reader device to the optimal frequency.

2. The method of claim 1, wherein the rule indicates that:
only the inventory parameter at each frequency supported by the reader device is to be evaluated in determining the optimal frequency for the reader device, and wherein the rule further indicates that a frequency with a highest inventory parameter is selected as the optimal frequency for the reader device; or
the inventory parameter and the interference parameter at each frequency supported by the reader device are to be evaluated in determining the optimal frequency for the reader device, wherein the rule further indicates that a frequency with a greatest sum of the inventory parameter and the interference parameter is selected as the optimal frequency for the reader device;
the inventory parameter, the positioning parameter, the interference parameter at each frequency supported by the reader device are to be evaluated in determining the optimal frequency for the reader device; or
when the movement parameter indicates that the moving tag is detected as moving in the area, the optimal frequency of the reader device and an adjacent reader device is a highest frequency supported by the reader device and the adjacent reader device.

3. An inventory system, comprising:
a reader device; and
a controller system,
wherein the reader device comprises a first application stored in a memory of the reader device, which when executed by a processor of the reader device, causes the first application to be configured to:
receive baseline data from a plurality of tags detected in an area of an inventory environment, wherein the baseline data comprises a quantity of the tags detected in the area and an identifier associated with each of the tags detected in the area;
receive tag data from a plurality of tags in an area covered by the reader device at a plurality of different frequencies supported by the reader device to obtain aggregate inventory data; and
transmit the baseline data and the aggregate inventory data to the controller system,
wherein a controller application stored in a memory of the controller system, which when executed by a processor of the controller system, causes the controller application to be configured to:
generate key performance indicator data for each of the different frequencies supported by the reader device based on the baseline data and the aggregate inventory data, wherein the key performance indicator data comprises:
an inventory parameter describing an accuracy of the tag data received at each frequency supported by the reader device,
a positioning parameter describing an accuracy of a calculated location of each of the tags based on a signal carrying the tag data of each of the tags received at each frequency supported by the reader device,
an interference parameter describing a level of interference detected in the signal received from each of the tags at each frequency supported by the reader device, and
instruct the reader device to set an antenna setting of the reader device to an optimal frequency, wherein the optimal frequency is based on at least one of the inventory parameter, the positioning parameter, or the interference parameter.

4. The inventory system of claim 3, wherein the controller application is further configured to determine the inventory parameter based on a comparison of first tag data received at a first frequency and second tag data received at a second frequency, wherein the first tag data indicates a first quantity of detected tags, and wherein the second tag data indicates a second quantity of detected tags.

5. The inventory system of claim 3 or 4, wherein the controller application is further configured to determine the positioning parameter based on a comparison of calculated locations of each of the tags from which the tag data was received at the reader device over each of the different frequencies, based on signal metadata of signals in which the tag data was received over each of the different frequencies.

6. The inventory system of any one of claims 3 to 5, wherein the controller application is further configured to determine the interference parameter based on the tag data received at the reader device over each of the different frequencies based on signal metadata of signals in which the tag data was received over each of the different frequencies.

7. The inventory system of any one of claims 3 to 6, wherein the key performance indicator data further comprises a movement parameter indicating whether movement of one or more tags is detected in the area and at least one of a direction of the movement or a speed of the movement.

8. The inventory system of any one of claims 3 to 7, wherein the controller application is further configured to determine the optimal frequency for the reader device based on a rule defining types of the key performance indicator data to use in determining the optimal frequency for the reader device, wherein the optimal frequency is one of the different frequencies supported by the reader device.

9. The inventory system of any one of claims 3 to 8, at least one of the different frequencies supported by the reader device is a millimeter wave frequency.

10. A method, comprising:
receiving, by a controller application executed at a controller system, data from a reader device, wherein the data includes baseline data and inventory data received by the reader device over each frequency supported by the reader device;
generating, by the controller application, key performance indicator data for each frequency over supported by the reader device based on the data, wherein the key performance indicator data comprises metrics evaluating a performance of the reader device at each frequency supported by the reader device; and
instructing, by the controller application, the reader device to set an antenna setting to an optimal frequency, wherein the optimal frequency is based on the key performance indicator data at each frequency supported by the reader device.

11. The method of claim 10, wherein receiving the data from the reader device comprises receiving, by the controller application, baseline data describing a plurality of tags detected in an area of an inventory environment from the reader device, wherein the baseline data comprises a quantity of the tags detected in the area and an identifier associated with each of the tags.

12. The method of claim 10 or 11, wherein receiving the data from the reader device comprises receiving, by the controller application, aggregate inventory data from the reader device, wherein the aggregate inventory data comprises tag data from one or more of tags in an area and collected by the reader device at each frequency supported by the reader device.

13. The method of any one of claims 10 to 12, wherein the key performance indicator data comprises at least one of:
an inventory parameter, wherein the inventory parameter is a value describing an accuracy of tag data counting tags detected in an area and received at each frequency supported by the reader device;
a positioning parameter, wherein the positioning parameter is a value describing an accuracy of a calculated location of each tag detected in an area based on tag data of the each tag detected in the area and received over each frequency supported by the reader device;
an interference parameter, wherein the interference parameter is a value describing a level of interference detected in each signal received from each tag detected in an area over each frequency supported by the reader device; and
a movement parameter, wherein the movement parameter indicates whether movement of one or more tags is detected in an area and at least one of a direction of the movement, a speed of the movement, when the tag exits or is predicted to exit the area, or when the tag enters or is predicted to enter another area covered by another reader device.

14. The method of any one of claims 10 to 13, further comprising determining, by the controller application, the optimal frequency based on a policy that indicates one or more parameters of the key performance indicator data that is to be used to determine the optimal frequency for the reader device.

15. A computer-readable medium comprising instructions which, when executed by a processor of a controller system, causes the controller system to perform the method of any one of claims 1, 2, and 10-14.
